(19) Europäisches Patentamt
European Patent Office
Office européen des brevets

(11) EP 2 740 585 B1

## (12) EUROPÄISCHE PATENTSCHRIFT

(45) Veröffentlichungstag und Bekanntmachung des Hinweises auf die Patenterteilung:
**20.07.2016 Patentblatt 2016/29**

(51) Int Cl.:
**B29C 67/24** *(2006.01)*    **B29C 70/46** *(2006.01)*

(21) Anmeldenummer: **13005435.6**

(22) Anmeldetag: **19.11.2013**

(54) **Verfahren und Vorrichtung zum Herstellen eines Formteils**

Method and device for manufacturing a moulded part

Procédé et dispositif de fabrication d'une pièce moulée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2012 DE 102012023608**

(43) Veröffentlichungstag der Anmeldung:
**11.06.2014 Patentblatt 2014/24**

(73) Patentinhaber: **Hennecke GmbH
53757 Sankt Augustin (DE)**

(72) Erfinder:
• **Wirth, Jürgen
51147 Köln (DE)**
• **Geuer, Jens
53757 Sankt Augustin (DE)**

• **Schamberg, Martin
53757 Sankt Augustin (DE)**

(74) Vertreter: **Gosdin, Michael et al
Adam-Stegerwald-Strasse 6
97422 Schweinfurt (DE)**

(56) Entgegenhaltungen:
EP-A1- 0 024 610     EP-A2- 0 753 389
EP-A2- 1 566 253     DE-A1- 2 829 016
DE-C1- 4 320 602     FR-A1- 2 889 100
US-A- 4 851 167     US-A- 5 087 193
US-B1- 6 663 812

• **N.N.: "Kompressionsmodul", , XP002721053, Gefunden im Internet: URL:http://de.wikipedia.org/wiki/Kompressi onsmodul [gefunden am 2014-03-03]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Herstellen eines Formteils, insbesondere eines flächigen, dünnwandigen Faserverbundbauteils, in einem Formwerkzeug. Des weiteren betrifft die Erfindung eine Vorrichtung zur Durchführung des Verfahrens.

Die Erfindung betrifft insbesondere ein Verfahren, bei dem ein mindestens zweikomponentiges Reaktionsgemisch in ein geschlossenes Formvolumen des Werkzeugs injiziert wird; in die Kavität wird vorher ein Fasergelege eingelegt. Die mindestens zwei Reaktionskomponenten werden dabei zunächst vermischt und dann in das geschlossene Formwerkzeug injiziert. Nach einer materialabhängigen Aushärtezeit wird die Form geöffnet und das fertige Faserverbundbauteil entnommen.

Diese Technologie ist als solche bekannt und wird vielfach angewendet. Allgemein bekannt ist auch die Problematik, dass es aufgrund des chemischen und/oder thermischen Schwundes in der Form während der Aushärtephase zu Materialablösung von der Formwand (Kavitätswand) und damit zu Störungen bzw. Qualitätsbeeinträchtigungen an der Bauteiloberfläche kommen kann. Ebenso kann beim Vermischen der Komponenten oder während des Füllvorgangs Luft in das Reaktionsgemisch eindispergiert werden, welche dann Fehlstellen und Farbschlieren an der Bauteiloberfläche verursachen kann. Beide Phänomene sind hinlänglich bekannt. In der DE 43 16 154 C1 in der EP 0 206 100 B1 und in der EP 0 024 610 A1 wird diese Problematik diskutiert. Weitere Lösungen zeigen die EP 1 566 253 A2, die DE 43 20 602 C1, die US 4 851 167 A, die DE 28 29 016 A1, die FR 2 889 100 A1, die EP 0 753 389 A2, die US 6 663 812 B1 und die US 5 087 193 A.

In der genannten DE 43 16 154 C1 wird dabei ein Verfahren zum sichtseitigen Beschichten eines Innenausbauteils beschrieben, bei dem während des Aushärtens ein erhöhter Druck auf das Reaktionsgemisch ausgeübt wird, damit vorhandene Luft im Harz gelöst wird. Zu diesem Zweck wird ein Tauchkantenwerkzeug in Verbindung mit einer Dichtung eingesetzt. Zum Aufbringen des Druckes bewegen sich die beiden Werkzeughälften während des Aushärtens aufeinander zu, wodurch das Formvolumen verringert und der Druck im Werkzeug konstant gehalten wird. Die Werkzeuggestaltung als Tauchkantenwerkzeug ist dabei sehr aufwendig und somit teuer. Außerdem stellt das zeitabhängige Schließen des Werkzeugs erhöhte Anforderungen an die Pressengestaltung, was viel kostenintensiver ist als ein Werkzeug mit nur einer Schließstellung.

In der genannten EP 0 206 100 B1 wird ebenfalls ein Verfahren beschrieben, bei dem das Werkzeug zwei verschiedene Schließstellungen besitzt, so dass wie im Falle der DE 43 16 154 C1 entsprechend hohe Anforderungen an die Presse gestellt werden müssen. Das dort beschriebene Verfahren arbeitet nicht zufriedenstellend, wenn ein Werkzeug eingesetzt werden soll, das nur einmalig geschlossen und anschließend nur noch geschlossen gehalten werden soll.

Die genannte EP 0 024 610 A1 beschreibt unter anderem ein Verfahren unter Einsatz eines Werkzeugs mit elastisch verformbaren Formwänden. In dem Dokument wird allerdings lediglich gelehrt, bei einem Formvolumen von 5 Litern mittels elastischer Formwände einen Gesamtfehler im Füllvolumen von bis zu 100 ml zu kompensieren. Gleichzeitig wird angegeben, dass ein hoher Druckanstieg im Werkzeug zu vermeiden ist, da dieser zwangsläufig die Mischbedingungen beeinflusst und die Mischgüte beeinträchtigen kann. Hierzu wird ausgeführt (Seite 7, Zeile 13 bis 17), dass während des eigentlichen Mischvorganges kein Überfüllen des Hohlraumes stattfinden soll, um nachteilige Rückwirkungen auf die Vermischung zu vermeiden. Daraus ergibt sich ein extrem elastisches System, welches sich einerseits sehr nachteilig auf die Maßhaltigkeit des herzustellenden Bauteils auswirkt und welches andererseits dazu führt, dass die Werkzeugwände sehr dünnwandig werden, so dass sich diese bei erhöhtem Forminnendruck dauerhaft verformen.

Die DE 102 60 278 A1 offenbart ein Verfahren zur Herstellung eines Schichtkörpers mit einer Tragstruktur, einer dekorativen Außenschicht und einer elastischen Schaumstoffschicht zwischen der Tragstruktur und der Außenschicht. Dabei liegen die Tragstruktur und die Außenschicht an der Kavitätswandung an und werden innenseitig mit dem aufschäumenden Schaumgrundstoff druckbeaufschlagt, der die Schaumstoffschicht bildet. Aus der DE 198 22 113 C1 ist ein Verfahren zum Herstellen von Formteilen bekannt, die jeweils aus einem Trägerteil, einer Dekorschicht und einer sich dazwischen befindlichen Schaumstoffschicht bestehen. Durch Einbringen einer schaumbildenden reaktiven Flüssigkeit zwischen Trägerteil und Dekorschicht werden die besagten Teile miteinander verbunden.

Bei dem in der EP 0 024 610 A1 erwähnten Zahlenbeispiel ergibt sich bei einem Forminnendruck von z. B. $10 \times 10^5$ Pa (10 bar) - dies liegt eigentlich bereits außerhalb der Lehre nach diesem Dokument, da ja möglichst keine Druckerhöhung in der Mischkammer entstehen soll - ein Kompressionsmodul der Kavität von lediglich $500 \times 10^5$ Pa (500 bar).

Der hier interessierende Kompressionsmodul beschreibt, welche Druckänderung in der Kavität nötig ist um eine bestimmte Volumenänderung der Kavität hervorzurufen. Der Kompressionsmodul ergibt sich vorliegend zu

$$K = \frac{\Delta p}{\Delta V / V}$$

mit

    *K:* Kompressionsmodul,
    $\Delta$p: Druckänderung in der Kavität,

$\Delta V$: Volumenänderung der Kavität infolge der Druckänderung,

V: nominales Formvolumen der Kavität.

Mit Blick auf die diskutierte EP 0 024 610 A1 gilt, dass der Kompressionsmodul bei noch kleineren Forminnendrücken weiter sinkt. Wenn man das aus diesem Dokument bekannte Werkzeug von außen mit einem hohen Druck beaufschlagen würde, um den Forminnendruck zu erhöhen und dadurch die eindispergierte Luft zu komprimieren, würde dies dazu führen, dass einerseits die Werkzeugwände plastisch verformt werden und dass sich andererseits eine sehr undefinierte Bauteilgeometrie ergäbe. (siehe hierzu auch die Ausführungen in der EP 0 024 610 A1, Seite 8, Zeilen 10 bis 16: Hier wird ausgeführt, die Wandung des Hohlraumes des Formwerkzeugs mit einer elastischen Membran auszustatten bzw. als elastische Membran auszubilden. Dies ist allerdings nur zweckmäßig, wenn auf die Genauigkeit der Konturen des Formwerkzeugs im Bereich der elastischen Membran kein großer Wert gelegt wird.)

Die in der EP 0 024 610 A1 beschriebene Lösung ist daher nur für solche Werkzeuge sinnvoll, bei denen von vornherein keine Luft eindispergiert wird, so dass diese auch nicht durch erhöhten Forminnendruck komprimiert werden muss, und bei denen nur geringe Anforderungen an die Exaktheit der Bauteildimensionen gestellt werden oder bei denen die elastische Membran außerhalb der eigentlichen Bauteilgeometrie liegt und nicht Teil der das Bauteil begrenzenden Formwände ist.

Für ein Verfahren der eingangs genannten Art ist die Lehre der EP 0 024 610 A1 daher nicht geeignet. Das Eindispergieren von Luft zumindest am Schussbeginn ist in der Regel nicht zu vermeiden und führt bei flächigen und dünnwandigen Bauteilen zwangsläufig zu optischen Oberflächenstörungen, d. h. zu Qualitätseinbußen. Das Positionieren des Speichervolumens außerhalb der das Bauteil begrenzenden Formwände führt in den meisten Anwendungsfällen dazu, dass die Fließwege zu weit werden, so dass der volumetrische Materialschwund während der Aushärtephase nicht im gesamten Bauteil kompensiert werden kann und es zu Fehlstellen oder zu sogenannten "Orangenhauteffekten" an der Bauteiloberfläche kommt.

Der Erfindung liegt daher die **Aufgabe** zugrunde, ein Verfahren und eine zugehörige Vorrichtung der eingangs genannten Art so fortzubilden, dass die genannten Nachteile vermieden werden. Demgemäß soll es möglich werden, auch sehr flache und dünnwandige Formteile mit einwandfreier Formteiloberfläche und präzise definierten geometrischen Abmessungen in einfacher und prozesssicherer Weise herzustellen. Insbesondere sollen Oberflächenmarkierungen und Fehlstellen zuverlässig verhindert und so Formteile hoher Qualität gefertigt werden können.

Die Lösung dieser Aufgabe zeichnet sich verfahrensgemäß dadurch aus, dass das Verfahren die Schritte umfasst:

a) Bereitstellen des Formwerkzeugs, wobei das Formwerkzeug eine Kavität mit einem nominalen Formvolumen zum Einbringen eines Reaktionsgemisches aufweist, wobei die Kavität durch mindestens einen Kavitätswandabschnitt begrenzt wird, der beim Einbringen des Reaktionsgemisches elastisch verformbar ist und wobei der Kompressionsmodul der Kavität zwischen $2.000 \times 10^5$ Pa (2.000 bar) und $10.000 \times 10^5$ Pa (10.000 bar) beträgt;

b) Einbringen des Reaktionsgemisches in die Kavität, wobei das Reaktionsgemisch mit einem solchen Druck in die Kavität eingebracht wird, dass sich das Kavitätsvolumen bei der Einbringung des Reaktionsgemisches durch elastische Verformung des mindestens einen Kavitätswandabschnitts über das nominale Formvolumen hinaus vergrößert;

c) Verfestigenlassen des Reaktionsgemisches in der Kavität;

d) Entformen des fertigen Formteils aus dem Formwerkzeug.

Vor der Einbringung des Reaktivgemisches in die Kavität gemäß obigem Schritt b) wird bevorzugt ein Fasergelege in die Kavität eingebracht, insbesondere eingelegt.

Das Reaktivgemisch wird dabei bei der Durchführung des obigen Schritts b) vorzugsweise so eingebracht, dass sich ein Forminnendruck zwischen $10 \times 10^5$ Pa (10 bar) und $100 \times 10^5$ Pa (100 bar) einstellt. Im einfachsten Fall wird ein Druck gewählt, der einerseits die Form, d. h. namentlich den elastischen Kavitätswandabschnitts genügend verformt, so dass sich das gewünschte Speichervolumen ergibt, und bei dem andererseits die Elastizität der Kavitätswand dafür sorgt, dass nach erfolgter Aushärtung und damit eingetretenem Schrumpf die Kavitätswand wieder ihre (unverformte) Ausgangslage erreicht. Zu diesem Zweck muss der Druck genau so hoch gewählt werden, dass das daraus resultierende Speichervolumen dem Materialschwund entspricht.

Nach der Durchführung des obigen Schritts b) und vor der Durchführung des Schritts d) kann auf den mindestens einen Kavitätswandabschnitt von außen ein Druck, insbesondere ein pneumatischer oder hydraulischer Druck, aufgebracht werden, so dass sich der mindestens eine Kavitätswandabschnitt verformt und sich das Volumen der Kavität vermindert. Hiernach wird also vor dem Aushärten des Reaktionsgemisches die elastische Kavitätswandung mit einem äußeren zusätzlichen Druck beaufschlagt, wodurch der Druck in der Form derart erhöht wird, dass beim Durchströmen des Geleges eingeschlossene oder zum Schussbeginn in der Mischkammer eindispergierte Luftblasen in Lösung gebracht oder zumindest soweit komprimiert werden, dass nach dem Aushärten keine sichtbaren Luftblasen im Bauteilinneren und an der Bauteiloberfläche zu erkennen sind. Die Verformung besagter elastischer Kavitätswände wird damit und aufgrund des chemischen und thermischen Schrumpfens nach dem Füllvorgang teilweise oder vollständig wieder rückverformt, wobei mit Hilfe des äußeren Druckes der Druck innerhalb der Kavität auch während der Aushärtung auf einem Niveau gehalten wird, bei dem die Luft im Reaktionsgemisch soweit komprimiert wird, dass nach dem Aushärten keine sichtbaren Luftblasen im Bauteilinneren und an der Bauteiloberfläche zu erkennen sind.

Eine Fortbildung der Erfindung sieht daher vor, dass der auf den mindestens einen Kavitätswandabschnitt von außen aufgebrachte Druck so gesteuert oder geregelt wird, dass der Druck im noch nicht verfestigten Reaktionsgemisch in der Kavität auf einem vorgegebenen Niveau, insbesondere auf einem konstanten Wert, gehalten wird. Da der Forminnendruck durch die Verfestigung des Reaktionsgemisches und den damit verbundenen chemischen Schrumpf der Reaktionsmasse mit fortschreitender Zeit abnimmt, kann demgemäß durch die Erhöhung des äußeren Druckes der Forminnendruck konstant gehalten werden.

Ferner kann vorgesehen werden, dass der auf den mindestens einen Kavitätswandabschnitt von außen aufgebrachte Druck während des Aushärtens des Reaktionsgemisches erhöht wird. Weiterhin kann aber auch der auf den mindestens einen Kavitätswandabschnitt von außen aufgebrachte Druck während des Aushärtens des Reaktionsgemisches abgesenkt werden. Es ist auch möglich, sowohl eine Erhöhung als auch eine Absenkung des Drucks in Form eines Druckprofils zu fahren.

Eine spezielle und vorteilhafte Ausgestaltung sieht weiter vor, dass der auf den mindestens einen Kavitätswandabschnitt von außen aufgebrachte Druck so gesteuert oder geregelt wird, dass der Druck im noch nicht verfestigten Reaktionsgemisch in der Kavität von einem Druckniveau unmittelbar nach dem Einbringen des Reaktionsgemisches gemäß obigem Schritt b) von mindestens 50 x $10^5$ Pa (50 bar) während der Durchführung des Verfestigenlassens gemäß dem obigen Schritt c) abfällt.

Eine sehr präzise Geometrie des herzustellenden Formteils wird nach einer Weiterbildung dadurch sichergestellt, dass der auf den mindestens einen Kavitätswandabschnitt von außen aufgebrachte Druck so gesteuert oder geregelt wird, dass die Verformung des mindestens einen Kavitätswandabschnitts zum Ende des Verfestigenlassens gemäß obigem Schritt c) zu Null gebracht wird. Der äußere Druck kann somit zum Reaktionsende hin so eingestellt werden, dass die Verformung der Formwände aufgehoben wird und damit Bauteile mit exakt definierter Wandstärke gefertigt werden.

Die vorgeschlagene Vorrichtung umfasst ein Formwerkzeug mit einer Kavität mit einem nominalen Formvolumen. Die Erfindung sieht vor, dass die Kavität mindestens einen sie begrenzenden Kavitätswandabschnitt aufweist, der ausgebildet ist, um sich beim Einbringen des Reaktionsgemisches elastisch zu verformen, wobei der Kompressionsmodul der Kavität zwischen 2.000 x $10^5$ Pa (2.000 bar) und 10.000 x $10^5$ Pa (10.000 bar) beträgt.

Der mindestens eine elastisch verformbare Kavitätswandabschnitt kann mit Mitteln in Verbindung stehen, mit denen auf den Kavitätswandabschnitt von außen ein Druck aufgebaut werden kann.

In Versuchen mit sehr unterschiedlichen Formteilgeometrien und Formvolumina hat sich beim Einsatz des vorgeschlagenen Verfahrens überraschenderweise gezeigt, dass es für die meisten Anwendungen unabhängig von diesen unterschiedlichen Randbedingungen genügt, die Form so zu gestalten, dass sie eine bestimmte Elastizität aufweist, welche sich in Analogie zum Kompressionsmodul von Flüssigkeiten definieren lässt (zur Definition des Kompressionsmoduls, wie er hier verwendet wird, s. oben). So gelang es relativ einfach, großflächige Teile, wie z. B. großflächige Kfz-Strukturbauteile, ohne Oberflächenstörungen zu erzeugen, während die Formen für kleinteilige Bauteile, wie z. B. Handyschalen, häufig zu steif waren.

Im Allgemeinen werden Formwerkzeuge zu steif gebaut, wenn sie nach den Regeln der allgemeinen Formgebung unter Verwendung entsprechender Normalien hergestellt werden. Durch Umgestaltung des Werkzeugs gemäß der erfindungsgemäßen Lösung gelang es, auch diese kleinteiligen Bauteile ohne Oberflächenstörungen und Fehlstellen herzustellen. Damit wurde ein sehr einfacher Parameter gefunden, mit dessen Hilfe sich Werkzeuge mit Unterstützung moderner Softwaretools, mit denen Verformungen in Abhängigkeit des Innendrucks sehr genau berechnet werden können, so gestalten lassen, dass das Problem von Oberflächenstörungen bei diesen Bauteilen vermieden werden kann.

Die vorgeschlagene Idee stellt also insbesondere auf ein Verfahren zum Herstellen flächiger Faserverbundbauteile ab, bei dem Reaktionsgemisch in ein geschlossenes Formvolumen, in dem ein Fasergelege eingelegt ist, injiziert wird, wobei Bereiche der das Formvolumen begrenzenden Formwand elastisch verformbar ausgeführt sind. Dabei wird die Form gezielt überfüllt, so dass die elastisch verformbaren Bereiche der das Formvolumen begrenzenden Formwand so verformt werden, dass das Formvolumen während des Füllens größer wird. Die Form ist dabei so ausgelegt bzw. konstruiert, dass sie einen Kompressionsmodul (Definition s. oben) im Bereich von 2.000 x $10^5$ Pa (2.000 bar) bis 10.000 x $10^5$ Pa (10.000 bar) aufweist.

Der Kompressionsmodul ist dabei in Analogie zum Kompressionsmodul beispielsweise einer Flüssigkeit definiert. Er gibt an, wie sich das Formvolumen bzw. Kavitätsvolumen in Abhängigkeit einer Druckänderung bzw. in Abhängigkeit des Drucks in der Kavität ändert.

Die erfindungsgemäß vorgeschlagenen Bereichsgrenzen sind dabei wesentlich: Bei zu geringer Formelastizität, d. h. bei einem Kompressionsmodul oberhalb von 10.000 x $10^5$ Pa (10.000 bar), muss ein zu hoher Druck in der Form aufgebaut werden, um genügend Speichervolumen als Folge der Aufweitung des Formvolumens zu erreichen, damit dieses den chemischen und thermischen Schwund ausgleichen kann. Zu hohe Injektionsdrücke wirken sich einerseits negativ auf die Dosiereinheit für das flüssige Reaktionsgemisch aus, andererseits erfordern sie insbesondere bei großflächigen Bauteilen extrem hohe Zuhaltekräfte für das Formwerkzeug und damit schwere und teure Pressen. Aus diesem Grund ist eine ausreichend hohe Elastizität der Form, entsprechend einem Kompressionsmodul unterhalb von 10.000 x $10^5$ Pa (10.000 bar) erforderlich.

Eine zu große Formelastizität, d. h. ein Kompressionsmodul unterhalb von 2.000 x $10^5$ Pa (2.000 bar), hingegen führt zu Problemen bezüglich der geforderten Bauteildimensionen. Ein erhöhter Forminnendruck während des Füllens und Aushärtens ist notwendig, um die insbesondere bei Schussbeginn eindispergierte Luft in Lösung zu bringen oder zumindest um das Luftvolumen so zu reduzieren, dass optische Störungen wie Schlieren oder Fehlstellen (z. B. trockene Fasern) im fertigen Bauteil vermieden werden. Wenn dieser Forminnendruck jedoch dazu führt, dass sich das Formvolumen zu sehr aufweitet oder die Form aufgrund des Fülldrucks sogar öffnet und undicht wird, ist es schwierig, die geforderten Toleranzen bezüglich der Bauteildimensionen einzuhalten bzw. überhaupt Formteile zu produzieren. Deshalb wird die Elastizität der Form derart nach unten begrenzt, dass der Kompressionsmodul der Kavität über 2.000 x $10^5$ Pa (2.000 bar) liegt. Realisiert wird der geforderte Kompressionsmodul in den beanspruchten Grenzen zum Beispiel dadurch, dass die Wandstärken der Form entsprechend angepasst werden, wobei die Form im Bereich der umlaufenden Dichtkanten jedoch so massiv ausgeführt wird, dass die Form unter Einfluss des Fülldruckes nicht undicht wird. Bei großflächigen Teilen ist es in der Regel vorteilhaft, die Wandstärke in mehreren voneinander getrennten Bereichen der Formwand zu reduzieren, wobei die dünnwandigen Bereiche durch Stege bzw. dickwandigere Bereiche unterbrochen sind. Dadurch wird verhindert, dass die Form im wesentlichen nur in der Mitte ausbeult, was dazu führt, dass das sich während der Verfestigung schrumpfende und in diesem Zustand nur noch bedingt fließfähige Material zu weite Wege fließen muss. Da die daraus resultierenden leichten Ausbeulungen bei Teilen mit glänzender Oberfläche jedoch sichtbar sind, sollten die elastischen Bereiche der Formwand in diesem Fall auf der Nicht-Sichtseite des Bauteils liegen.

Die Einstellung des Kompressionsmoduls der Kavität des Formwerkzeugs erfolgt fachmännisch, indem der mindestens eine elastische Wandungsabschnitt hinsichtlich seiner Abmessungen entsprechend ausgebildet bzw. gewählt wird. Wird beispielsweise die Dicke des elastischen Wandungsabschnitts groß gewählt, wird der Kompressionsmodul entsprechend ebenfalls groß. Wird besagte Wanddicke vermindert, sinkt auch der Kompressionsmodul.

In den Zeichnungen sind Ausführungsbeispiele der Erfindung dargestellt. Es zeigen:

Fig. 1 ein Formwerkzeug mit einer Kavität und einem angebauten Mischkopf, wobei das Formwerkzeug eine elastische Wand aufweist, die die Kavität begrenzt,

Fig. 2 ein Formwerkzeug analog zu dem gemäß Fig. 1, wobei mehrere elastische Wandungsbereich der Kavität vorgesehen sind, und

Fig. 3 ein Formwerkzeug, basierend auf dem gemäß Fig. 2, bei dem in Weiterentwicklung Mittel zum Aufbringen eines äußeren Drucks auf die elastischen Wandungsbereiche vorhanden sind.

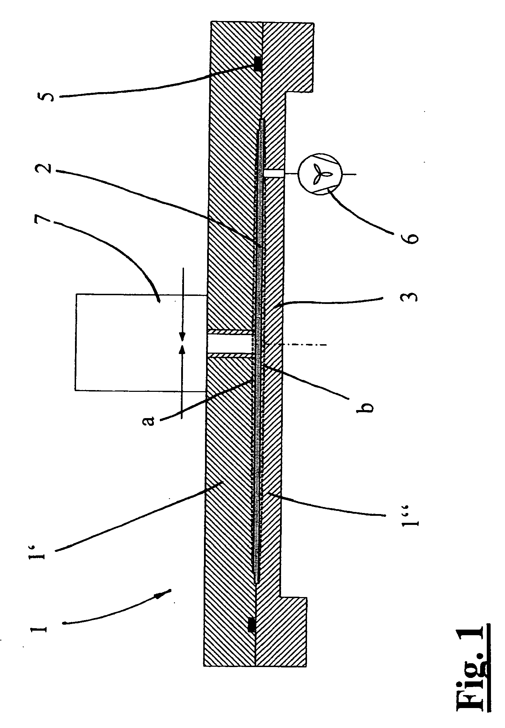

In der den Figuren ist jeweils ein Formwerkzeug 1 dargestellt, das eine Kavität 2 aufweist, die zur Formung eines Formteils gestaltet ist. Das Formwerkzeug 1 besteht aus einem Werkzeugoberteil 1' und einem Werkzeugunterteil 1". Zwischen den beiden Werkzeughälften, d. h. in die Kavität 2, ist jeweils ein Fasergelege eingelegt, welches außen leicht verpresst und dadurch fixiert wird. Noch weiter außenliegend ist eine umlaufende Dichtung 5 angeordnet, die dazu dient, Dichtigkeit herzustellen, wenn vor der Injektion des Reaktionsgemisches die Kavität 2 samt Fasergelege evakuiert wird, um den verbleibenden Luftanteil zu minimieren. Hierfür ist in Fig. 1 eine Vakuumeinheit 6 vorgesehen.

Fig. 1 zeigt eine einfache Ausführung eines Formwerkzeugs 1 gemäß einer ersten Ausführungsform der Erfindung. Das Formwerkzeug 1 wird über den einen Mischkopf 7 mit einem mindestens zweikomponentigen Reaktionsgemisch (Polyol und Isocyanat im Falle der Polyurethanverarbeitung) soweit gefüllt, dass sich das Formwerkzeug 1 mit einem elastischen Kavitätswandabschnitt 3 etwas ausbeult.

Die umlaufende Dichtung 5 sorgt dafür, dass das Formwerkzeug 1 über die Vakuumeinheit 6 vor der Injektion des Reaktionsgemischs evakuiert werden kann. Durch die erfindungsgemäße Gestaltung des Formwerkzeug 1 vergrößert sich das Volumen des Werkzeugs bzw. der Kavität 2, wie es durch die gestrichelten Linien a und b angedeutet ist und zwar gerade soweit, dass in dem zusätzlichen freien Kavitätsvolumen genügend Material (Reaktionsgemisch) gespeichert werden kann, um den Volumenverlust während des Aushärtens und Abkühlens aufgrund des chemischen und thermischen Schwundes zu kompensieren.

Bei größeren Werkzeugdimensionen werden jedoch die Fließwege während des Aushärtens zu weit, denn das meiste Material wird natürlich in der Mitte des Werkzeugs bzw. der Kavität gespeichert, da sich das Werkzeug dort am meisten ausbeult. Der chemische und thermische Schwund wirkt jedoch im gesamten Werkzeug annähernd gleich, wenn man von einer gleichmäßigen Temperatur im Werkzeug ausgeht. Als Folge kann es dann in den Randbereich zu Oberflächenstörungen oder Fehlstellen kommen, da aufgrund der langen Fließwege und aufgrund der hohen Strömungswiderstände beim Strömen durch das Gelege das hauptsächlich in der Mitte gespeicherte Material nicht schnell genug in die Randbereiche fließen kann.

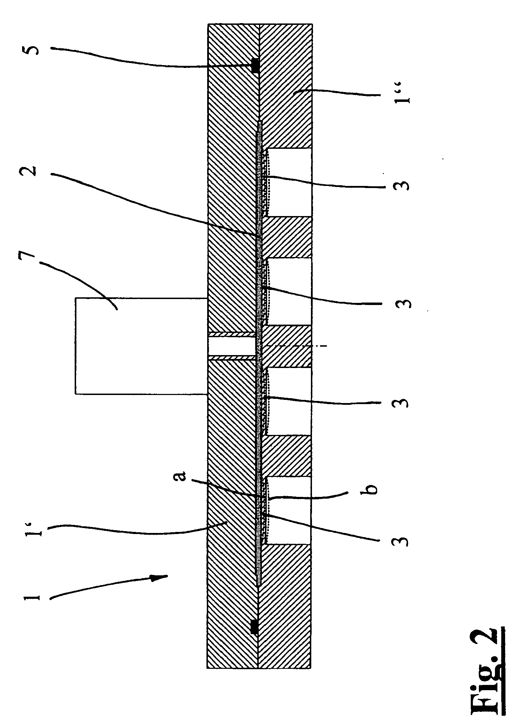

Deshalb kann es je nach den Abmessungen und der Geometrie des Formteils vorteilhaft sein, die elastischen Bereiche 3 der Werkzeugwand in mehrere Teil-Bereiche zu unterteilen, wie es Fig. 2 zeigt. Dadurch verteilt sich das gespeicherte Volumen gleichmäßiger über die Kavität; somit werden dadurch auch die Fließwege während des Aushärtens und Abkühlens kürzer.

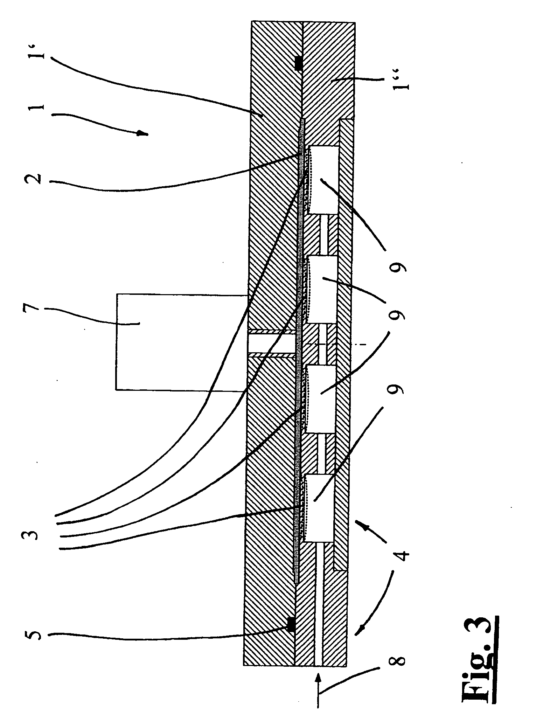

Eine weitere und besonders vorteilhafte Werkzeuggestaltung zeigt Fig. 3. Hier können die elastischen Bereiche 3 der Werkzeugwand von der Gegenseite her, d. h. von außen, noch mit Luft oder einem anderen Medium und folglich mit einem Druck beaufschlagt werden. Hierfür sind Mittel 4 zur Druckaufbringung vorgesehen.

Die Luft wird über einen Einlass 8 in Werkzeugaußenkammern 9 eingeleitet. Im Idealfall wird dieser Druck zeitlich so gesteuert, dass sich ein Kräftegleichgewicht zwischen der Werkzeugkavität 2 und den Werkzeugaußenkammern 9 einstellt, wobei der Druck im Werkzeuginnenraum während des Aushärtens und Abkühlens in der Kavität 2 auf einem ausreichend hohen Niveau gehalten wird, um eindispergierte Luft in Lösung zu halten bzw. zumindest soweit zu komprimieren, dass nach dem Aushärten keine sichtbaren Luftblasen an der Bauteiloberfläche zu erkennen sind.

Dadurch sind die membranartigen elastischen Kavitätswandabschnitte 3 nach dem Aushärten und Abkühlen keinen oder zumindest nur sehr kleinen mechanischen Spannungen ausgesetzt, so dass das zu fertigende Formteil sehr exakt der durch die Werkzeug- bzw. Kavitätsgeometrie definierten Form entspricht.

**Bezugszeichenliste:**

| | |
|---|---|
| 1 | Formwerkzeug |
| 1' | Werkzeugoberteil |
| 1'' | Werkzeugunterteil |
| 2 | Kavität |
| 3 | elastischer Kavitätswandabschnitt |
| 4 | Mittel zur Druckaufbringung |
| 5 | Dichtung |
| 6 | Vakuumeinheit |
| 7 | Mischkopf |
| 8 | Einlass |
| 9 | Werkzeugaußenkammer |
| V | nominales Formvolumen der Kavität |
| $K$ | Kompressionsmodul |
| $\Delta p$ | Druckänderung in der Kavität |
| $\Delta V$ | Volumenänderung der Kavität infolge der Druckänderung |

| | |
|---|---|
| a | verformter Zustand der oberen Kavitätswand |
| b | verformter Zustand der unteren Kavitätswand |

**Patentansprüche**

1. Verfahren zum Herstellen eines Formteils, insbesondere eines flächigen, dünnwandigen Faserverbundbauteils, in einem Formwerkzeug (1), umfassend die Schritte:

   a) Bereitstellen des Formwerkzeugs (1), wobei das Formwerkzeug (1) eine Kavität (2) mit einem nominalen Formvolumen (V) zum Einbringen eines Reaktionsgemisches aufweist, wobei die Kavität (2) mindestens einen sie begrenzenden Kavitätswandabschnitt (3) aufweist, der ausgebildet ist, um sich beim Einbringen des Reaktionsgemisches elastisch zu verformen, wobei der Kompressionsmodul ($K$) der Kavität (2) zwischen 2.000 x $10^5$ Pa (2.000 bar) und 10.000 x $10^5$ Pa (10.000 bar) beträgt;
   b) Einbringen des Reaktionsgemisches in die Kavität (2), wobei das Reaktionsgemisch unter Druck in die Kavität (2) eingebracht wird, so dass sich das Kavitätsvolumen bei der Einbringung des Reaktionsgemisches durch elastische Verformung des mindestens einen Kavitätswandabschnitts (3) über das nominale Formvolumen (V) hinaus vergrößert;
   c) Verfestigenlassen des Reaktionsgemisches in der Kavität (2);
   d) Entformen des fertigen Formteils aus dem Formwerkzeug (1).

2. Verfahren nach Anspruch 1, **dadurch gekennzeichnet, dass** vor der Einbringung des Reaktivgemisches in die Kavität (2) gemäß Schritt b) von Anspruch 1 ein Fasergelege in die Kavität (2) eingebracht, insbesondere eingelegt, wird.

3. Verfahren nach Anspruch 1 oder 2, **dadurch gekennzeichnet, dass** das Reaktivgemisch bei der Durchführung von Schritt b) von Anspruch 1 unter Druck eingebracht wird, bis sich ein Forminnendruck zwischen 10 x $10^5$ Pa (10 bar) und 100 x $10^5$ Pa (100 bar) einstellt.

4. Verfahren nach einem der Ansprüche 1 bis 3, **dadurch gekennzeichnet, dass** nach der Durchführung von Schritt b) nach Anspruch 1 und vor der Durchführung von Schritt d) von Anspruch 1 auf den mindestens einen Kavitätswandabschnitt (3) von außen ein Druck, insbesondere ein pneumatischer oder hydraulischer Druck, aufgebracht wird, so dass sich der mindestens eine Kavitätswandabschnitt (3) verformt und sich das Volumen der Kavität (2) vermindert.

**5.** Verfahren nach Anspruch 4, **dadurch gekennzeichnet, dass** der auf den mindestens einen Kavitätswandabschnitt (3) von außen aufgebrachte Druck gesteuert oder geregelt wird, so dass der Druck im noch nicht verfestigten Reaktionsgemisch in der Kavität (2) auf einem vorgegebenen Niveau, insbesondere auf einem konstanten Wert, gehalten wird.

**6.** Verfahren nach Anspruch 4 oder 5, **dadurch gekennzeichnet, dass** der auf den mindestens einen Kavitätswandabschnitt (3) von außen aufgebrachte Druck während des Aushärtens des Reaktionsgemisches erhöht wird.

**7.** Verfahren nach einem der Ansprüche 4 bis 6, **dadurch gekennzeichnet, dass** der auf den mindestens einen Kavitätswandabschnitt (3) von außen aufgebrachte Druck während des Aushärtens des Reaktionsgemisches abgesenkt wird.

**8.** Verfahren nach einem der Ansprüche 4 bis 7, **dadurch gekennzeichnet, dass** der auf den mindestens einen Kavitätswandabschnitt (3) von außen aufgebrachte Druck gesteuert oder geregelt wird, so dass der Druck im noch nicht verfestigten Reaktionsgemisch in der Kavität (2) von einem Druckniveau unmittelbar nach dem Einbringen des Reaktionsgemisches gemäß Schritt b) von Anspruch 1 von mindestens 50 x $10^5$ Pa (50 bar) während der Durchführung des Verfestigenlassens gemäß Schritt c) von Anspruch 1 abfällt.

**9.** Verfahren nach einem der Ansprüche 4 bis 8, **dadurch gekennzeichnet, dass** der auf den mindestens einen Kavitätswandabschnitt (3) von außen aufgebrachte Druck gesteuert oder geregelt wird, so dass die Verformung des mindestens einen Kavitätswandabschnitts (3) zum Ende des Verfestigenlassens gemäß Schritt c) von Anspruch 1 zu Null gebracht wird.

**10.** Vorrichtung umfassend ein Formwerkzeug (1) mit einer Kavität (2) mit einem nominalen Formvolumen (V), zur Durchführung des Verfahrens nach einem der Ansprüche 1 bis 9,
**dadurch gekennzeichnet,**
**dass** die Kavität (2) mindestens einen sie begrenzenden Kavitätswandabschnitt (3) aufweist, der ausgebildet ist, um sich beim Einbringen des Reaktionsgemisches unter Druck elastisch zu verformen, wobei der Kompressionsmodul ($K$) der Kavität (2) zwischen 2.000 x $10^5$ Pa (2.000 bar) und 10.000 x $10^5$ Pa (10.000 bar) beträgt.

**11.** Vorrichtung nach Anspruch 10, **dadurch gekennzeichnet, dass** der mindestens eine elastisch verformbare Kavitätswandabschnitt (3) mit Mitteln (4) in Verbindung steht, mit denen auf den Kavitätswandabschnitt (3) von außen ein Druck aufgebaut werden kann.

**Claims**

**1.** Method for producing of a form part, especially of a plane thin-walled fiber composite part, in a mould (1), comprising the steps:

a) Providing of the mould (1), wherein the mould (1) comprises a cavity (2) with a nominal form volume (V) for inserting of a reactive mixture, wherein the cavity (2) comprises at least one cavity wall section (3), which is delimiting the cavity, which cavity wall section is designed to deform elastically during inserting of the reactive mixture, wherein the modulus of compressibility ($K$) of the cavity (2) is between 2.000 x $10^5$ Pa (2.000 bar) and 10.000 x $10^5$ Pa (10,000 bar);
b) Inserting of the reactive mixture into the cavity (2), wherein the reactive mixture is inserted under pressure into the cavity (2) so that the cavity volume is increased during the insertion of the reactive mixture due to elastic deformation of the at least one cavity wall section (3) above the nominal form volume (V);
c) Letting solidify of the reactive mixture in the cavity (2);
d) Demoulding of the finished form part from the mould (1).

**2.** Method according to claim 1, **characterized in that** prior the insertion of the reactive mixture into the cavity (2) according to step b) of claim 1 fiber material is introduced, especially inlayed, into the cavity (2).

**3.** Method according to claim 1 or 2, **characterized in that** the reactive mixture is inserted during step b) of claim 1 under pressure so that the inner mould pressure lays between 10 x $10^5$ Pa (10 bar) and 100 x $10^5$ Pa (100 bar).

**4.** Method according to one of claims 1 to 3, **characterized in that** after the processing of step b) according to claim 1 and prior the processing of step d) of claim 1 an outer pressure, especially a pneumatic or hydraulic pressure, is applied onto the at least one cavity wall section (3), so that the at least one cavity wall section (3) is deformed and the volume of the cavity (2) is reduced.

**5.** Method according to claim 4, **characterized in that** the outer pressure which is applied onto the at least one cavity wall section (3) is controlled or feed-back controlled so that the pressure in the reactive mixture in the cavity (2), which is not yet solidified, is kept on a predetermined level, especially on a constant value.

6. Method according to claim 4 or 5, **characterized in that** the outer pressure which is applied onto the at least one cavity wall section (3) is increased during the solidification of the reactive mixture.

7. Method according to one of claims 4 to 6, **characterized in that** the outer pressure which is applied onto the at least one cavity wall section (3) is decreased during the solidification of the reactive mixture.

8. Method according to one of claims 4 to 7, **characterized in that** the outer pressure which is applied onto the at least one cavity wall section (3) is controlled or feed-back controlled so that the pressure in the reactive mixture in the cavity (2), which is not yet solidified, decreases from a pressure level immediately after the insertion of the reactive mixture according to step b) of claim 1 of at least $50 \times 10^5$ Pa (50 bar) during letting solidify the reactive mixture according to step c) of claim 1.

9. Method according to one of claims 4 to 8, **characterized in that** the outer pressure which is applied onto the at least one cavity wall section (3) is controlled or feed-back controlled so that the deformation of the at least one cavity wall section (3) becomes zero till the end of letting solidify the reactive mixture according to step c) of claim 1.

10. Device comprising a mould (1) with a cavity (2) with a nominal form volume (V) for execution of the method according to one of claims 1 to 9, **characterized in that** the cavity (2) comprises at least one cavity wall section (3) which delimits the cavity (2) and which is designed in such a way that it deforms under pressure elastically during the insertion of the reactive mixture, wherein the modulus of compressibility (K) of the cavity (2) is between $2.000 \times 10^5$ Pa (2,000 bar) and $10.000 \times 10^5$ Pa (10,000 bar).

11. Device according to claim 10, **characterized in that** the at least one elastically deformable cavity wall section (3) is connected with means (4) by which an external pressure can be applied onto the cavity wall section (3).

**Revendications**

1. Procédé de fabrication d'une pièce moulée, en particulier d'un composant plat et à parois minces en composite de fibres dans un outil de moulage (1), le procédé comportant les étapes qui consistent à :

a) préparer l'outil de moulage (1), l'outil de moulage (1) présentant une cavité (2) d'un volume nominal de moule (V) dans laquelle est placé un mélange de réaction, présentant au moins une section (3) de paroi délimitant la cavité (2) et configurée pour se déformer élastiquement lors de l'apport du mélange de réaction, le module de compression (K) de la cavité (2) étant compris entre $2\,000 \times 10^5$ Pa (2 000 bars) et $10\,000 \times 10^5$ Pa (10 000 bars),
b) apport du mélange de réaction dans la cavité (2), le mélange de réaction étant apporté sous pression dans la cavité (2) de telle sorte que lors de l'apport du mélange de réaction, le volume de la cavité augmente par déformation élastique de la ou des sections de parois (3) de la cavité au-delà du volume nominal (V) du moule,
c) solidification du mélange de réaction dans la cavité (2) et
d) démoulage de la pièce moulée terminée hors de l'outil de moulage (1).

2. Procédé selon la revendication 1, **caractérisé en ce qu'**une garniture de fibres est placée et en particulier insérée dans la cavité (2) avant l'apport du mélange de réaction dans la cavité (2) à l'étape b) de la revendication 1.

3. Procédé selon les revendications 1 ou 2, **caractérisé en ce que** lors de l'exécution de l'étape b) de la revendication 1, le mélange réactif est amené sous une pression telle qu'il s'établisse à l'intérieur du moule une pression comprise entre $10 \times 10^5$ Pa (10 bars) et $100 \times 10^5$ Pa (100 bars).

4. Procédé selon l'une des revendications 1 à 3, **caractérisé en ce qu'**après l'exécution de l'étape b) de la revendication 1 et avant l'exécution de l'étape d) de la revendication 1, une pression et en particulier une pression pneumatique ou hydraulique est appliquée sur la ou les sections (3) de parois de la cavité de telle sorte que la ou les sections (3) de parois de la cavité se déforment et que le volume de la cavité (2) diminue.

5. Procédé selon la revendication 4, **caractérisé en ce que** la pression appliquée de l'extérieur sur la ou les sections (3) de la paroi de la cavité est commandée ou régulée de telle sorte que la pression qui règne dans le mélange de réaction non encore solidifié dans la cavité (2) soit maintenue à un niveau donné et en particulier à une valeur constante.

6. Procédé selon les revendications 4 ou 5, **caractérisé en ce que** la pression appliquée de l'extérieur sur la ou les sections (3) de parois de la cavité est augmentée pendant le durcissement du mélange de réaction.

**7.** Procédé selon l'une des revendications 4 à 6, **caractérisé en ce que** la pression appliquée de l'extérieur sur la ou les sections (3) de parois de la cavité est abaissée pendant le durcissement du mélange de réaction.

**8.** Procédé selon l'une des revendications 4 à 7, **caractérisé en ce que** la pression appliquée de l'extérieur sur la ou les sections (3) de parois de la cavité est commandée et régulée de telle sorte que pendant l'exécution de la solidification selon l'étape c) de la revendication 1, la pression qui règne dans le mélange de réaction non encore solidifié dans la cavité (2) descend depuis le niveau de pression qui règne immédiatement après l'apport du mélange de réaction dans l'étape b) de la revendication 1, d'environ $50 \times 10^5$ Pa (50 bars).

**9.** Procédé selon l'une des revendications 4 à 8, **caractérisé en ce que** la pression appliquée de l'extérieur sur la ou les sections (3) de parois de la cavité est commandée ou régulée de telle sorte que la déformation de la ou des sections (3) de parois de la cavité à la fin de la solidification de l'étape c) de la revendication 1 soit amenée à zéro.

**10.** Ensemble comprenant un outil de moulage (1) doté d'une cavité (2) d'un volume nominal (V) de moulage et servant à mettre en oeuvre le procédé selon l'une des revendications 1 à 9,
**caractérisé en ce que**
la cavité (2) est délimitée par au moins une section (3) de paroi configurée de telle sorte qu'elle se déforme élastiquement lors de l'apport du mélange de réaction sous pression, le module de compression ($K$) de la cavité (2) étant compris entre $2\,000 \times 10^5$ Pa (2 000 bars) et $10\,000 \times 10^5$ Pa (10 000 bars).

**11.** Ensemble selon la revendication 10, **caractérisé en ce que** la ou les sections (3) de parois de la cavité élastiquement déformables communiquent avec des moyens (4) par lesquels une pression peut être appliquée de l'extérieur sur la section (3) de paroi de la cavité.

**Fig. 1**

**Fig. 2**

EP 2 740 585 B1

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4316154 C1
- EP 0206100 B1
- EP 0024610 A1
- EP 1566253 A2
- DE 4320602 C1
- US 4851167 A
- DE 2829016 A1
- FR 2889100 A1
- EP 0753389 A2
- US 6663812 B1
- US 5087193 A
- DE 10260278 A1
- DE 19822113 C1